# EUROPEAN PATENT APPLICATION

(11) **EP 2 690 563 A1**
(43) Date of publication of application: **29.01.2014**
(21) Application number: 12005363.2
(22) Date of filing: 23.07.2012
(51) Int. Cl.: G06F 17/30

(54) **Method and device for reporting on data of documents generated from templates**

(71) Applicant: BRANDAD Systems AG, 90762 Fürth (DE)
(72) Inventor: Suttner, Matthias, 90513 Zirndorf (DE); Teichmann, Bodo, 90763 Fürth (DE)
(74) Representative: Grünecker, Kinkeldey, Stockmair & Schwanhäusser

(57) **Abstract**

A method, client computing device, server computing device and corresponding computer-readable storage medium are provided for reporting on data entered into data fields of a plurality of documents generated from a plurality of templates. The data is stored in one or more databases in association with field designations. A data field is selected in a document or template, and a symbolic designation is assigned to the selected data field. The symbolic designation is different from one or more field designations identifying the selected data field. A database query is issued which includes the symbolic designation, and data stored in association with the respective field designations is then obtained.

## Description

### BACKGROUND OF THE INVENTION

### 1. Field of the Invention

The invention generally relates to databases and further relates to reporting on data stored in databases, and more particularly to the reporting on data which have been entered into data fields of a plurality of documents which are generated from a plurality of templates.

### 2. Description of the Related Art

In computer systems, data is commonly stored in databases. A database is an organized collection of data based on a data model. One of the well-known data models is the relational model where the data is organized based on two-dimensional arrays known as relations, or tables. The most common language associated with the relational data model is SQL.

Relational databases or other databases using a different model can be used to store data entered into data fields of documents which are generated from templates. For instance, there may be a server computer storing templates in any of a number of known data formats, including HTML, XML or the like. From these templates, an end user can then generate a document which has data fields into which the end user can enter data. This data is then stored in a database.

Taking the example of relational databases such as SQL databases, each data field in a document corresponds to a specific column in a database table which has assigned a particular data type. That is, when the end user enters data into a specific data field of a document, this data is stored in the respective column of the database which corresponds to this data field.

When a new data field is added to a template or document, it is therefore necessary to expand the database table by another column, and it is necessary to adapt any software accessing this data to enable the software to also access this new column. Significant efforts are necessary to always update and maintain the databases and software applications.

In addition, not every data field is actually present in each and every template or document. There may be a large number of templates stored on a server, and the number of documents generated from these templates may even be much larger. When a new data field is added for the reason that a certain template or document requires additional data to be stored, a new column is needed even though most of the templates and documents do not require this data. Consequently, the size of the database will increase rapidly which makes it difficult to maintain the database on the server, and which also slows down the entire system even where the additional data fields are not used.

To overcome such problems one could use schema-free databases such as NoSQL. Schema-free databases do not require a user to know schema details. Another way to overcome the above mentioned disadvantages is to store structured documents (such as XML or JSON documents) in database blobs. For instance, such documents of any structure can be stored as a single entity ion a blob of an SQL database. When a new data field is added to a template or document, it is then no longer necessary to add a further column to the database table as the data can be added to the structured document which is already present in the blob field.

However, it is extremely difficult to generate a report on data which had been entered into data fields which have been added at a later stage. Taking the example of SQL, when adding a new column for each new data field, a new report has to be generated or an existing report has to be updated accordingly. When storing the additional data in structured documents held by blob fields, the generation of reports is becoming even more difficult because the new data cannot be accessed by updating the SQL query.

Another problem with data fields which are added to templates or documents at a later stage is that this may lead to a situation where data of substantially the same semantics is stored in different columns or blobs or even databases, and nowhere is there any indication that these columns, blobs or the like are related. For instance, a new data field is added to a certain template or document to store cycle information. The data field gets the field designation "Cycle" and a new column is added to the database. Not knowing that this has happened, at a still later stage, another data field is added to another template or document to store substantially the same cycle information. However, in this case, the new data field gets the field designation "Period" and a further column is added to the database. Where the number of templates or documents is large or where the number of persons generating the templates or documents is large, this may happen quite often. At the end, the database or databases storing the data entered into the data fields may include multiple columns of different field designations even though the information stored in the various columns is essentially of the same nature. This problem occurs with relational databases where data is stored in columns or blobs, but also with other types of databases.

In this situation as well, the reporting on such data is becoming very difficult. One way to deal with this situation is to first run a complete analysis in order to determine the various field designations in the databases. Based on this analysis, a complex report has to be generated. Alternatively, one can run a database consolidation to merge all columns in order to unify the field designations. However, this again leads to significant efforts in the course of report generation.

### SUMMARY OF THE INVENTION

It is the object of the invention to provide a method, client computing device, server computing device and computer-readable storage medium that facilitate the reporting on data entered into data fields of a plurality of documents generated from a plurality of templates, in particular, where new data fields have been added to existing templates or documents.

In one embodiment, a method of reporting on data entered into data fields of a plurality of documents generated from a plurality of templates is provided. The data fields of the documents correspond to respective data fields of the templates. The data is stored in one or more databases in association with field designations which identify the respective data fields. The method comprises selecting at least one data field in at least one of the plurality of documents and/or in at least one of the plurality of templates, where each one of the selected data fields is identified by one or more field designations. The method further comprises assigning a symbolic designation to the selected at least one data field, where the symbolic designation is different from the one or more field designations that identify the selected at least one data field. Further, the method comprises issuing a database query which includes the symbolic designation, and obtaining, in response to the database query which includes the symbolic designation, data stored in the one or more databases in association with the one or more field designations that identify the selected at least one data field.

The documents, templates and/or databases may be stored on one or more server computing devices which are coupled to a client computing device via a network. The client computing device may run one or more applications capable of communicating with the one or more server computing devices. The method may then be performed by the one or more applications which run on the client computing device.

Further, the one or more applications may present to a user a basic report that allows the user to customize the basic report by selecting the at least one of the plurality of documents and/or templates from which the at least one data field is selected, selecting the at least one data field and assigning the symbolic designation. The database query is then issued from the customized report.

In an embodiment, the data stored in the one or more databases in association with field designations are stored at least in part in one or more structured documents held by one or more database blobs. Alternatively, or additionally, at least one of the one or more databases may be a schema-free database.

The symbolic designation assigned to the selected at least one data field may be different from the one or more field designations which identify the selected at least one data field but may be the same as a field designation identifying at least one data field not being selected.

Moreover, at least one of the one or more databases may have a table containing the selected at least one data field, wherein the symbolic designation assigned to the selected at least one data field may be the same as a field designation that identifies another data field in the same table.

In an embodiment, the symbolic designation assigned to the selected at least one data field may be different from any field designation identifying any data field of any document or template.

In any of the above embodiments, at least two data fields may be selected in different documents and/or templates, where the two data fields are identified by different field designations and assigned to the same symbolic designation.

In an embodiment, at least two data fields are selected in different documents and/or templates, where the two data fields are for holding data stored in different databases. The two data fields may be assigned to the same symbolic designation.

In another embodiment, a client computing device is provided which is capable of being communicatively coupled to one or more server computing devices via a network for reporting on data entered into data fields of a plurality of documents generated from a plurality of templates. The data fields of the documents correspond to respective data fields of the templates. The data is stored in one or more databases in association with field designations that identify the respective data fields. The client computing device comprises means for a user to select at least one data field in at least one of the plurality of documents and/or in at least one of the plurality of templates, where each one of the selected data fields is identified by one or more field designations. The client computing device further comprises means for the user to assign a symbolic designation to the selected at least one data field, where the symbolic designation is different from the one or more field designations which identify the selected at least one data field. The client computing device further comprises means for the user to issue a database query including the symbolic designation, and means for obtaining, in response to the database query including the symbolic designation, data stored in the one or more databases in association with the one or more field designations identifying the selected at least one data field.

In yet another embodiment, there is provided a server computing device which is capable of being communicatively coupled to a client computing device via a network. The server computing device comprises one or more databases that store data in data fields in association with field designations which identify the data fields. The server computing device further comprises a controller configured to receive a database query including at least one symbolic designation different from the field designations, where the at least one symbolic designation is assigned to at least one of the data fields. The controller is further configured to identify the at least one of the data fields based on the at least one symbolic designation, by querying the one or more databases using the database query for data stored in data fields tagged with the at least one symbolic designation, and/or by translating the database query including the at least one symbolic designation into a translated database query including at least one field designation corresponding to the at least one symbolic designation, and querying the one or more databases using the translated database query. The controller is further configured to retrieve data stored in the at least one of the data fields.

In a further embodiment, there is provided a computer-readable storage medium storing instructions that, when executed by a processor, cause the processor to perform the above methods.

The methods, client computing devices, server computing devices and computer-readable storage media may be adapted in accordance with any of the embodiments described above or below.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating an exemplary client-server architecture to which the invention can be applied in an embodiment;
FIG. 2 is a flow chart illustrating steps to be performed by an end user for reporting on data stored in the databases in accordance with an embodiment;
FIG. 3 is an exemplary screen shot of a software application that can be used by the end user to prepare a customized report, according to an embodiment;
FIG. 4 is a flow chart illustrating a process at a server computing device to tag existing data fields with symbolic designations in accordance with an embodiment; and
FIG. 5 is a flow chart illustrating a process at a server computing device to deliver data in accordance with an embodiment.

### DETAILED DESCRIPTION OF THE INVENTION

The illustrative embodiments of the present invention will be described with reference to the figure drawings wherein like elements and structures are indicated by like reference numbers.

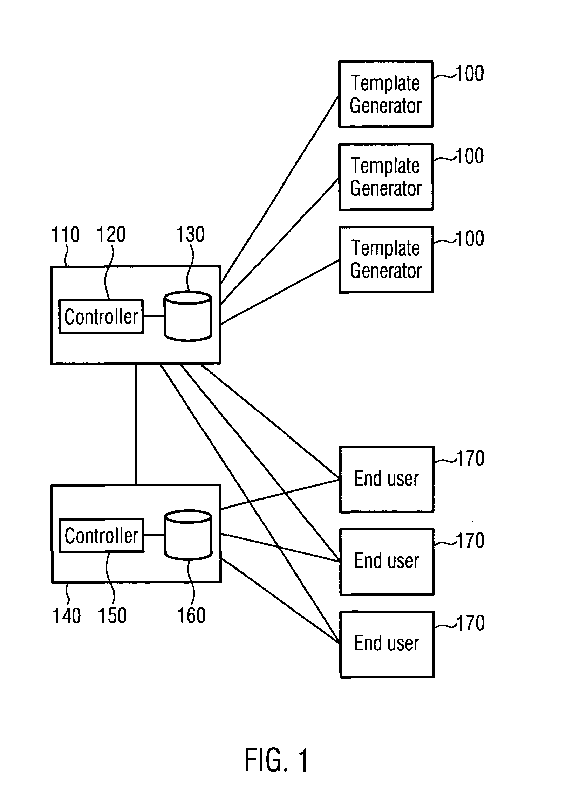

Referring now to the drawings and in particular to FIG. 1, an exemplary client-server system is depicted in an embodiment. A server computing device 110 has a database 130 and a controller 120 to store templates. The templates are generated by one or more template generators 100 which may be software developers or corporate identities which generate, update and maintain the various templates. In an embodiment, the system of FIG. 1 may include multiple server computing devices 110, and each server computing device may have one or more databases 130.

In the exemplary system of FIG. 1, there are also one or more server computing devices 140 which each include one or more databases 160 and corresponding controllers 150, to store documents generated from the templates.

In an embodiment, document generation is performed by one or more end users 170. As depicted in FIG. 1, the end users 170 may have access to the server computing devices 110, 140.

As mentioned above, the templates stored in database 130 of server computing device 110 are generated, updated and maintained by one or more template generators 100. If a data field is to be added to an existing template, one of the template generators 100 changes the template accordingly, and stores it in the database 130. In another embodiment, data fields may also be added to templates by one or more of the end users 170. For instance, a user may be provided with a dedicated software facility that retrieves a template from database 130, adds a new data field upon request by the user, and stores the modified template in the database 130. This optional embodiment can be implemented as an alternative of, or in addition to, template updates made by the template generators 100.

In another alternative or additional embodiment, one or more of the end users 170 can access documents from database 160 which had been generated from templates stored in database 130. The end users 170 may then add a data field to a document retrieved from database 160. The updated document may be stored in the database 160 afterwards.

When an end user 170 has created a document from a template, the end user can enter data into any of the data fields within this document. This data may then also be stored in database 160. In an embodiment, the entered data is stored in the same database 160 which also holds the document, and the data can even be stored as part of the document. In another embodiment, the data is stored in a database different from the database storing the documents. The database storing the document and the database storing the entered data can be part of the same server computing device 140 or can be distributed over several server computing devices 140.

In any of the above embodiments, the database storing the documents may be a relational database or, alternatively, a simple file system. In an embodiment, the documents are stored in blob fields. The database 160 storing the entered data may be a relational database or a schema-free database or a database of a different type.

While in the above embodiments, data is entered into data fields of documents which have been generated from templates, it may also be possible in another embodiment that data is entered by the end users 170 into data fields of templates. In this embodiment, an end user 170 accesses a template from database 130, and then enters data directly into one or more data fields of the accessed template. The entered data is then stored in database 160.

Once data has been entered into data fields of documents or templates, and stored in one or more databases 160, an end user 170 may run a report on such data, as will be described below in more detail. It is noted that the end user 170 running the report may or may not be the same end user who has entered the data.

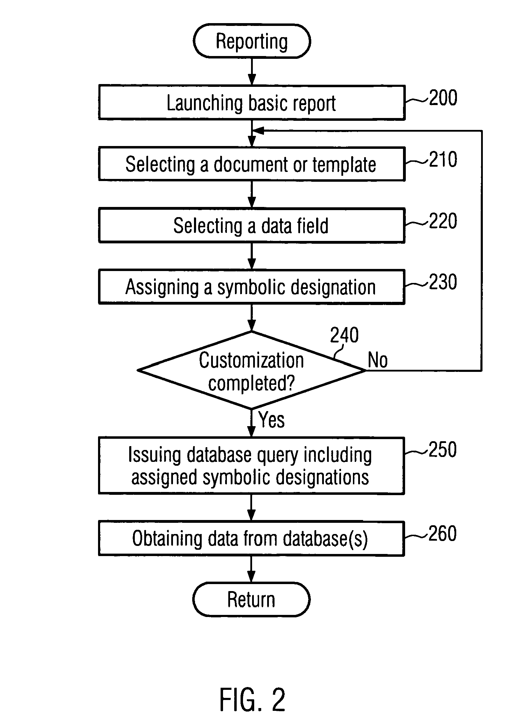

Turning now to FIG. 2, a flow chart is depicted to illustrate a process of running a report by an end user 170 in accordance with an embodiment. In a first step 200, the end user 170 launches a basic report. The basic report may be a software application where the end user 170 can specify which data to collect for reporting. In its simplest form, the basic report may allow the end user 170 to select one of several predefined report definitions. In a more advanced basic report, the end user 170 is presented with field designations of some or all of the templates or documents, and the end user 170 can then choose certain field designations for the report.

As will now be described in more detail, the embodiments provide an end user 170 with the possibility to assign symbolic designations to existing data fields. For instance, the end user 170 may wish to report on data which had been entered into data fields of different documents and/or templates. However, the field designations are different throughout the documents and templates. For example, one template or document may store cycle information in a data field having the field designation "Cycle". Similar information is stored in another template or document in a data field having the field designation "Period". Conventionally, it would have been necessary to either create a new complicated report, or to consolidate the databases. This is no longer necessary in the embodiments as the end user 170 can assign symbolic designations (or aliases).

For doing so, the end user 170 selects one of the respective documents or templates in step 210 and selects the respective data field in step 220. The end user 170 may then enter a symbolic designation and assign this symbolic designation to the selected data field in step 230.

In the example given above, the end user 170 could for instance select the document or template where the respective data field is designated as "Cycle" and then select this data field. Afterwards, the end user enters "Period" as symbolic designation to the data field designated by "Cycle".

These steps can be recursively repeated to assign multiple symbolic designations to multiple data fields in one or more documents or templates. As shown in FIG. 2, a determination is made in step 240 to determine whether the customization of the basic report, i.e., the assignment of symbolic designations is completed. If not, the process returns to step 210. It is noted that in another embodiment, the process may also return directly to step 220 if more than one data field is to be selected for the same document or template.

It is noted that step 200 is optional and can be omitted in any embodiment. In still further embodiments, steps 210, 220, 230 and 240 may be performed prior to step 200, *i.e*., the end user may define and assign symbolic designations in advance. When doing so, in order to enhance or complete the report customization, the end user may specify additional fields to be reported after having launched the basic report.

Once the end user 170 has assigned all symbolic designations he wanted to assign, the process continues with step 250 where a database query is issued to server computing device 140 to retrieve the data of the respective data fields. The database query includes the symbolic designation or designations previously assigned by the end user 170.

For instance, in the example given above where the symbolic designation "Period" has been added to a data field which has a field designation of "Cycle", the database query includes the symbolic designation "Period". The field designation "Cycle" may be omitted from the query. In response to the query, data stored in database 160 in association with the respective data fields is then obtained in step 260.

Thus, according to the embodiments, it is not necessary for a template generator 100 to modify the templates, nor is it necessary for the system administrator of the server computing device 140 to consolidate the database 160. It is the end user 170 itself who can identify those data fields in the various documents or templates which store semantically similar data, and customize a basic report by assigning symbolic designations. The end user may then use the self-assigned symbolic designations to query the database 160.

The process of the embodiments is particularly advantageous where the number of templates and/or documents is large. In this case, there may be more than two data fields in more than two documents or templates which store similar data in fields designated differently. For instance, while one template may use the field designation "Cycle" and another template may use "Period" instead, there may be further templates using "cycle", "Cycl.", "C", "cyc", "T", "Tper", or the like to designate the same information. The end user 170 can easily assign each of these data fields to the same symbolic designation, and run the customized report.

In an embodiment, the symbolic designation entered by the end user and assigned to one or more data fields in one or more documents or templates may be the same as a field designation in any of the documents or templates. In another embodiment, the end user 170 may choose a symbolic designation which is not used as field designation in any of the documents or templates.

Where two data fields are assigned to the same symbolic designation, these two data fields may have different field designations and/or may be located in different databases. In another embodiment, a symbolic designation may be the same as a field designation or as another symbolic designation within the same database 160 or even within the same database table.

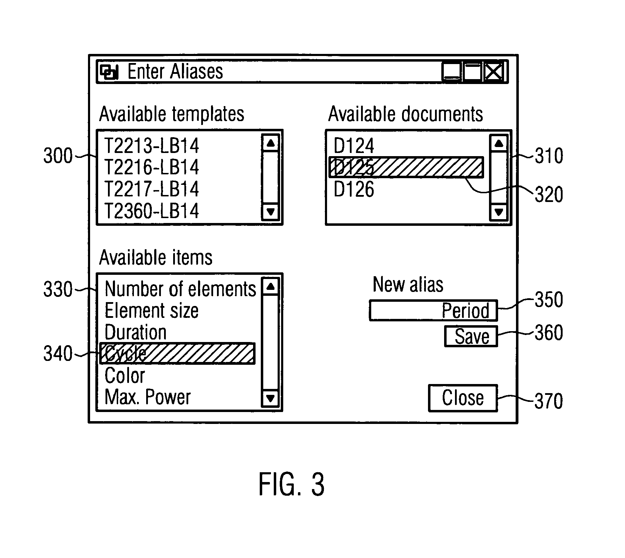

Turning now to FIG. 3, an exemplary screen shot is shown which can be used by an end user 170 to perform steps 210, 220, 230. The software application of this embodiment may be realized by means of any software development technique. In particular, it is noted that the application may be a web application.

In the exemplary screen shot shown in FIG. 3, the end user 170 is presented with a list 300 of available templates and/or a list 310 of available documents. It is noted that embodiments exist which do not show a list 310 of available documents. This may be particularly advantageous where documents have the same data fields as the templates from which they are generated. In other embodiments where documents have the same data fields as the templates from which they are generated, there may be provided a list 310 of available documents in the user interface to facilitate searching by document names rather than by template names. In still further embodiments, a list 310 of available documents is shown but no list 300 of available templates.

In another embodiment, a list 310 of available documents may be used where documents can contain more or different data fields than the templates from which they are generated. For instance, if it is possible, subject to certain restrictions, to add new data fields to documents at the time of generating the documents from the templates, or later, then selecting a document may reveal more data fields than selecting the corresponding template.

That is, in any of these embodiments, the user may select one or more of the templates and/or documents. In the present case, the user has selected document D125 as shown with reference numeral 320.

In the present example, document D125 has six data fields which are presented to the end user 170 in a list 330 of available items. In this example, the user has selected the field designation "Cycle" as shown with reference numeral 340 because the user wants to add a symbolic designation to those data fields. For doing so, the end user enters "Period" into the input box 350, and presses a save button 360 to assign this symbolic designation. The user may then add further symbolic designations to the same or other data fields in the same or other templates and/or documents, and once finished, the user presses a close button 370.

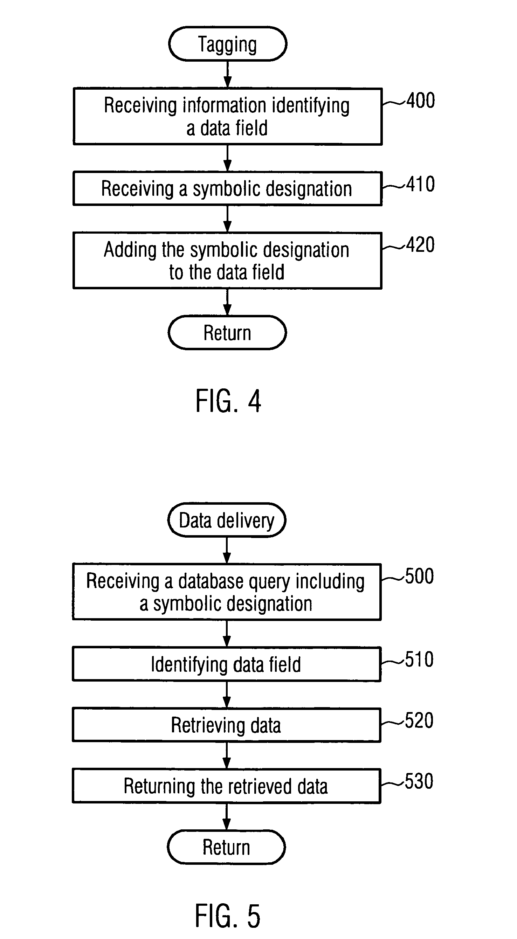

Turning now to FIG. 4, a process is depicted to illustrate an embodiment of a process performed by the server computing device 140 when the user has assigned a symbolic designation. For instance, when the user has pressed the save button 360, the controller 150 of the server computing device 140 receives information identifying the selected data field 340 in step 400. The controller 150 further receives the symbolic designation entered into input box 350, in step 410. It is noted that both steps 400, 410 can be merged into a single step in an embodiment. Once the necessary information as been received, the symbolic designation is added to the database 160 in step 420.

One embodiment of adding a symbolic designation to the database 160 is to add the symbolic designation and the corresponding field designation to a look-up table (not shown). This look-up table is then used by the controller 150 of the server computing device 140, or by the software application at the end user's client computing device 170, to translate the database query which includes the symbolic designation into a database query which includes only field designations.

In an embodiment where the data field is part of a structured document within a blob, the symbolic designation can be added to the respective blob. For instance, taking the example of having a schema-free part of the data stored in the database in a blob field in the form of an XML document, the symbolic designation "Period" could be added as a new XML attribute "alias":
<Cycle alias="Period">130.00</Cycle>

This can be achieved similarly with techniques other than XML, for instance with JSON, NoSQL, or the like.

Turning now to FIG. 5, a process is depicted in accordance with an embodiment to illustrate steps performed at the server computing device 140 once an end user 170 has issued a database query which includes at least one symbolic designation. This database query is received by the controller 150 of the server computing device 140 in step 500. The controller then identifies the respective data field in step 510, retrieves the corresponding data in step 520 and returns the retrieved data in step 530.

Where the data fields have been tagged with the symbolic designations, e.g. by performing the process of FIG. 4, the step 510 of identifying the data field may query the one or more databases 160 using the tagged symbolic designation.

For example, when the data fields have been tagged by an XML attribute as described above, step 510 could include an XML search for this attribute.

In another embodiment, step 510 may be performed by translating the database query which includes the at least one symbolic designation into a translated database query which includes the one or more field designations corresponding to the respective symbolic designations. The translated database query may then be used to query the one or more databases 160.

As mentioned above, for translating the database query, the controller 150 of the server computing device 140 may use a look-up table. It is noted that in another embodiment, the look-up table is generated and maintained by the end user 170 itself, and stored with the end user's client computing device 170. In this case, a translation of the database query is performed by the end user's client computing device 170 rather than by the server computing device 140.

In conclusion, a technique is provided that allows an end user 170 to easily generate or run a report even where the databases store data of the same type or contents in multiple data fields or columns, or even databases, using different field designations. Thus, the invention is particularly advantageous in systems where the software developers who created the database structure and who defined the reports, are distinct from the template generators 100 who generated and designed the layout of the templates, and further distinct from the end users 170 who enter the data into the data fields and who run the report. It is noted that even the end users who enter the data into the data fields and the end users who run the report may be persons or entities distinct from each other.

The embodiments advantageously allow the end users 170 to assign their own designations to data fields, i.e. to columns of a data table, thereby merging such columns. An end user can do so at the time he or she wishes to run a report. Most notably, the end user 170 can do so in a manner independent from any software developer or template generator, even where data fields had been added at a later stage and when there is no report available which specifically addresses this new data field.

According to an example based on these embodiments, an end user can easily run a report on all documents or templates that have been previously generated or used by this end user. The end user can also easily perform statistics on data previously entered into the data fields. For instance, a user can sum up or average cycle information and calculate minimum and maximum cycles even where the cycle information is stored in multiple databases 160 using multiple different field designations. Additionally, in any of the embodiments described, the end user can filter the data retrieved from the databases by any of predefined or user-specified filter parameters. This allows the end user to focus on the desired data without being confronted with unrelated information.

Another example of where the embodiments can be implemented is a system where the templates are used to generate documents to include specific information on certain automobiles. If additional information on these automobiles is added to the templates or documents at a later stage, the embodiments nevertheless allow running a report and doing statistics on the automobiles even where field designations have been added to multiple templates or documents in a diverse and non-unitary manner.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the spirit and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

What is claimed is:

## Claims

1. A method of reporting on data entered into data fields of a plurality of documents generated from a plurality of templates, the data fields of the documents corresponding to respective data fields of the templates, the data being stored in one or more databases (160) in association with field designations identifying the respective data fields, the method comprising:
selecting (220) at least one data field in at least one of said plurality of documents and/or in at least one of said plurality of templates, each one of the selected data fields being identified by one or more field designations;
assigning (230) a symbolic designation to the selected at least one data field, the symbolic designation being different from the one or more field designations identifying the selected at least one data field;
issuing (250) a database query including the symbolic designation; and
obtaining (260), in response to said database query including the symbolic designation, data stored in said one or more databases in association with the one or more field designations identifying the selected at least one data field.

2. The method of claim 1, wherein the documents, templates and/or databases are stored on one or more server computing devices (110, 140) coupled to a client computing device (170) via a network, the client computing device running one or more applications capable of communicating with said one or more server computing devices, the method being performed by said one or more applications running on the client computing device.

3. The method of claim 2, wherein said one or more applications present to a user a basic report allowing the user to customize said basic report by selecting (210) said at least one of said plurality of documents and/or templates from which said at least one data field is selected, selecting (220) said at least one data field and assigning (230) the symbolic designation, wherein the database query is issued from the customized report.

4. The method of one of claims 1 to 3, wherein the data stored in said one or more databases in association with field designations are stored at least in part in one or more structured documents held by one or more database blobs.

5. The method of one of claims 1 to 4, wherein at least one of said one or more databases is a schema-free database.

6. The method of one of claims 1 to 5, wherein the symbolic designation assigned to the selected at least one data field is different from the one or more field designations identifying the selected at least one data field but is the same as a field designation identifying at least one data field not being selected.

7. The method of one of claims 1 to 6, wherein at least one of said one or more databases has a table containing the selected at least one data field, wherein the symbolic designation assigned to the selected at least one data field is the same as a field designation identifying another data field in the same table.

8. The method of one of claims 1 to 5, wherein the symbolic designation assigned to the selected at least one data field is different from any field designation identifying any data field of any document or template.

9. The method of one of claims 1 to 8, wherein at least two data fields are selected in different documents and/or templates, the two data fields being identified by different field designations and being assigned to the same symbolic designation.

10. The method of one of claims 1 to 9, wherein at least two data fields are selected in different documents and/or templates, the two data fields being for holding data stored in different databases, the two data fields being assigned to the same symbolic designation.

11. A client computing device (170) capable of being communicatively coupled to one or more server computing devices (110, 140) via a network for reporting on data entered into data fields of a plurality of documents generated from a plurality of templates, the data fields of the documents corresponding to respective data fields of the templates, the data being stored in one or more databases (160) in association with field designations identifying the respective data fields, the client computing device comprising:
means (330) for a user to select at least one data field in at least one of said plurality of documents and/or in at least one of said plurality of templates, each one of the selected data fields being identified by one or more field designations;
means (350) for the user to assign a symbolic designation to the selected at least one data field, the symbolic designation being different from the one or more field designations identifying the selected at least one data field;
means for the user to issue a database query including the symbolic designation; and
means for obtaining, in response to said database query including the symbolic designation, data stored in said one or more databases in association with the one or more field designations identifying the selected at least one data field.

12. The client computing device of claim 11, adapted to perform the method of one of claims 1 to 10.

13. A server computing device capable of being communicatively coupled to a client computing device via a network, the server computing device comprising:
one or more databases (160) storing data in data fields in association with field designations identifying the data fields; and
a controller (150) configured to perform the following acts:
receiving (500) a database query including at least one symbolic designation different from the field designations, the at least one symbolic designation being assigned to at least one of said data fields;
identifying (510) said at least one of said data fields based on said at least one symbolic designation, by performing one or more of:
querying said one or more databases using the database query for data stored in data fields tagged with said at least one symbolic designation; and
translating the database query including the at least one symbolic designation into a translated database query including at least one field designation corresponding to the at least one symbolic designation, and querying said one or more databases using the translated database query; and
retrieving (520) data stored in said at least one of said data fields.

14. A computer-readable storage medium storing instructions that, when executed by a processor, cause the processor to perform the method of one of claims 1 to 10.
